# EUROPÄISCHE PATENTSCHRIFT

(11) **EP 2 349 761 B1**
(45) Veröffentlichungstag und Bekanntmachung des Hinweises auf die Patenterteilung: **23.03.2016**
(21) Anmeldenummer: 08758159.1
(22) Anmeldetag: 04.06.2008
(51) Int. Cl.: B60J 7/12

(54) **CABRIOLET-VERDECK UND ZUGEHÖRIGES FAHRZEUG**
CABRIOLET TOP AND ASSOCIATED VEHICLE
CAPOTE DE CABRIOLET ET VÉHICULE ASSOCIÉ

(30) Priorität: 27.06.2007 DE 102007029704
(43) Veröffentlichungstag der Anmeldung: 03.08.2011
(73) Patentinhaber: Valmet Automotive Oy, 23500 Uusikaupunki (FI)
(72) Erfinder: HOLLENBECK, Sven, 49492 Westerkappeln (DE); HILBK, Holger, 49201 Dissen (DE); WESEMANN, Michael, 49565 Bramsche (DE)
(74) Vertreter: Kronthaler, Schmidt & Coll.
(86) Internationale Anmeldenummer: PCT/DE2008/000930
(87) Internationale Veröffentlichungsnummer: WO 2009/000226

(56) Entgegenhaltungen:
- WO-A-2005/039905
- DE-A1-102005 001 871
- GB-A- 928 722
- GB-A- 2 116 916
- US-A- 2 772 114

## Beschreibung

Die vorliegende Erfindung betrifft ein Cabriolet-Verdeck mit einem äußeren Verdeckbezug, der durch die Überführung des Verdecks aus dessen rückwärtiger Ablagestellung in eine Geschlossenstellung spannbar ist und sowohl in der Ablagestellung als auch in der Geschlossenstellung zumindest teilweise mittels einer Befestigungsvorrichtung festgelegt ist. Weiterhin betrifft die Erfindung ein Cabriolet-Fahrzeug mit dem vorgenannten Verdeck.

Verdecke von Cabriolet-Fahrzeugen weisen aufgrund von Fertigungstoleranzen insbesondere der Karosserie, an der das Verdeck angebracht wird, unterschiedliche Verdeckspannungen auf. Eine zu große Verdeckspannung führt besonders bei einem manuell zu öffnenden Verdeck zu einem spannungsbedingten Aufspringen des Verdecks unmittelbar nach dem Entriegeln der Verschlüsse und bedarf zum Schließen des Verdecks eines hohen Kraftaufwands. Andersherum ist bei zu geringen Spannungen des Fahrzeugsverdecks eine höhere Lärmentwicklung durch Faltenwurf und auf diesen zurückzuführende Verwirbelungen vorhanden.

Aus der GB 928,722 A ist ein Fahrzeug mit einer flexiblen Abdeckung bekannt, wobei die Abdeckung in einem Endbereich mit einer Leiste verbunden ist. Über die Lage der Leiste ist eine Spannung der Abdeckung einstellbar.

Es ist daher Aufgabe der vorliegenden Erfindung, ein Cabriolet-Verdeck zu schaffen, das besser an Karosserien mit fertigungsbedingten Toleranzen anpassbar ist. Ebenfalls soll ein Cabriolet-Fahrzeug geschaffen werden, dessen Verdeck optimal gespannt ist.

Gelöst wird diese Aufgabe durch ein Cabriolet-Verdeck nach dem Oberbegriff des Anspruchs 1, welches gemäß dem kennzeichnenden Teil des Anspruchs 1 weitergebildet ist. Die Aufgabe wird ferner durch ein Cabriolet-Fahrzeug nach Anspruch 15 gelöst.

Die Befestigungsvorrichtung des Cabriolet-Verdecks legt den Verdeckbezug variabel, dass heißt einstellbar, fest. Die Verdeckspannung ist daher einstellbar. Durch die Möglichkeit der veränderlichen Anbindung des Verdeckbezugs ist die angebundene Länge des Verdeckstoffes variierbar und die Verdeckspannung ist durch diese Einstellbarkeit an die Toleranzen der Karosserie oder auch des Verdecks anpassbar. Nach der zumindest teilweisen Freigabe des Verdeckbezugs kann in den Bereichen, in denen aufgrund einer zu großen Verdeckspannung mehr Verdeckbezug benötigt wird, mehr Länge oder Breite zur Verfügung gestellt werden. Anschließend wird der Verdeckbezug durch die Befestigungsvorrichtung wieder festgelegt. Die Verdeckspannung ist dann optimiert.

Beispielsweise wird hierbei der Verdeckbezug in Fahrzeuglängsrichtung und/oder in Fahrzeugquerrichtung verlängert. Auch in im wesentlichen vertikaler Richtung, beispielsweise nahe der Karosserie in den Seitebereichen des Verdecks kann so zusätzliche Länge zur Verfügung gestellt werden, wobei mit "zusätzlicher Länge" allgemein die endliche Freigabe von Verdeckbezug durch die Befestigungsvorrichtung zur Veränderung der Verdeckspannung in der Geschlossenstellung gemeint ist. Entsprechend ist unter Reduzierung der Verdeckbezuglänge das Nachspannen des Verdecks auch in eine Richtung, die nicht einer Längsrichtung entsprechen muss, zu verstehen.

Bei zu größer Verdeckspannung kann diese in den Bereichen, die eine zu geringe Spannung aufweisen und in denen beispielsweise Verdeckfalten auftreten, erhöht werden, indem der Verdeckbezug in einer anderen Relativposition von der Befestigungsvorrichtung festgelegt wird. Hierzu kann der Verdeckbezug in einer entspannten Stellung des Verdecks von der Befestigungsvorrichtung freigegeben werden und der entsprechende Bereich nachgespannt werden, um nach der Festlegung des Bezugs oder des Verdeckstoffes in der Geschlossenstellung eine erhöhte Verdeckspannung zu erhalten. Es versteht sich, dass die Einstellung der Verdeckspannung vorteilhafterweise in einer Verdeckstellung erfolgt, in der der Verdeckbezug nicht gespannt ist.

Durch die gezielt veränderbare Verdeckspannung ist gerade auch nach Einbau des Verdecks einerseits ein Toleranzausgleich hinsichtlich von Fertigungstoleranzen entweder des Rohbaus oder auch von Teilen des Verdeckgestänges durchführbar. Andererseits lässt sich die Schließkraft, die insbesondere für manuell zu betätigende Verdecke aufgewendet werden muss, durch die Einstellbarkeit der Verdeckspannung optimieren. Weiterhin ist die während der Lebensdauer des Verdecks möglicherweise auftretende Faltenbildung aufgrund eines Nachlassens und Weicherwerdens des Stoffes bzw. des Bezugs im Rahmen eines Wartungsaufenthalts durch Nachspannen des Verdeckbezugs reduzierbar. Der Verdeckbezug braucht nicht ausgetauscht zu werden.

Bei der erfindungsgemäßen Ausführung weist die Befestigungsvorrichtung ein Klemmprofil auf, welches mit einer Kunststoffleiste, die an dem Verdeckstoff angeschweißt oder anders angebracht ist, zusammenwirkt und diese in einer entsprechenden Nut festlegt. Die Kunststoffleiste erstreckt sich dann vorteilhafterweise und abhängig von ihrer Länge zumindest teilweise in einer Nut eines das Klemmprofil umfassendenden Bügels. Ein solches Kunststoffprofil kann dergestalt ausgebildet sein, dass beispielsweise in den Seitenbereichen eines Haltebügels in Richtung der C-Säule eine nur sehr geringe oder gar keine Variation der Länge vorgenommen werden kann und andererseits in dem rückwärtigen im Wesentlichen quer zur Längsrichtung verlaufenden Haltebügelbereich eine umso größere Variation der Länge möglich ist. Bei einer solchen Befestigungsvorrichtung wird mit einer Änderung der Verdeckbezuglänge beispielsweise im Bereich einer vertikalen Längsmittelebene zu den Seiten des Verdecks hin eine kontinuierliche Änderung der Verdeckbezuglänge erzeugt. Dies ist insbesondere bei Cabriolet-Fahrzeugen von Vorteil, bei denen im Bereich des Verdeckhauptlagers wenig Variation gewünscht ist. Neben einer Rasterung in einem rückwärtigen Bereich des Verdecks ist insofern dann eine kontinuierlich variierende Längenveränderung des Verdeckstoffs ausgehend von der C-Säule hin zum rückwärtigen Bereich des Cabriolet-Verdecks und entlang der Bügelkontur und wiederum hin zur C-Säule vorhanden.

Ohne ein Arretiermittel wird die Kunststoffleiste dann bei einem entsprechenden Zug des Verdeckbezugs maximal in die Nut hineingezogen, wobei der Verdeckbezug die Kunststoffleiste vorteilhafterweise in Richtung des Nutbodens zieht. Bei dem Verzicht auf Steckverbindungen zur Festlegung der Kunststoffleiste kann der Verdeckbezug dann nicht aus der Nut des Klemmprofils heraus.

Üblicherweise ist der Verdeckbezug in einem Bereich festgelegt, der von einer Dichtung zur Verhinderung des Eindringens von Wasser entfernt liegt. Ein Teil der Bezuglänge befindet sich somit im gespannten Zustand des Verdecks in einem nicht sichtbaren Bereich. Besondere Vorteile bietet eine Befestigungsvorrichtung, mit der der Verdeckbezug zerstörungsfrei lösbar festgelegt ist, was eine lange Lebensdauer des Verdecks unterstützt. Damit ist das Verdeck beispielsweise auch in den nicht sichtbaren Bereichen weiterhin ohne Beschädigungen.

Die Befestigungsvorrichtung kann sowohl komplett Teil des Cabriolet-Verdecks sein, sie kann jedoch teilweise auch an der Karosserie angeordnet sein, wird hierbei jedoch weiterhin zum Verdeck gezählt. In einer vorteilhaften Ausbildung der Erfindung, bei der die Befestigungsvorrichtung durch einen Haltebügel mit ausgebildet wird, können auch die Bereiche, in denen der Haltebügel auf Seiten der Karosserie festgelegt ist, von der Befestigungsvorrichtung umfasst sein.

Bei einem Cabriolet-Verdeck, dessen Bezug eine Vorzugsrichtung aufweist, die in Längsrichtung des Fahrzeugs liegt, ist die Befestigungsvorrichtung vorteilhafterweise entweder im Bereich der Dachspitze und/oder im Bereich eines Übergangs von einem rückwärtigen Teil des Verdecks zur Karosserie angeordnet. Hierbei kann die Befestigungsvorrichtung vorteilhafterweise Teil eines Spannbügels oder auch Teil eines Haltebügels bzw. zumindest teilweise auch direkt an der Karosserie anzuordnen sein. Sofern die Befestigungsvorrichtung Teil des Spannbügels ist oder an diesem angeordnet ist, ist der Verdeckbezug über die Vorrichtung an dem Spannbügel festgelegt. Bei einer Befestigungsvorrichtung, die Teil eines Haltebügels oder an diesem angeordnet ist, wird der Verdeckbezug über die Befestigungsvorrichtung an dem Haltebügel und gegebenenfalls ergänzend von diesem an der Karosserie festgelegt.

Gemäß einer vorteilhaften Ausgestaltung der Erfindung weist das Cabriolet-Verdeck eine Befestigungsvorrichtung auf, mit der der Verdeckbezug auf zumindest zwei unterschiedliche Längen einstellbar ist. Bereits mit einer solchen minimalen Einstellbarkeit des Verdeckbezugs kann die Lebenszeit des Cabriolet-Verdecks bei gleichzeitig optimierter Verdeckform verlängert werden. Eine Einstellbarkeit mit zwei Stufen, in der eine beispielsweise mittels eines Arretiermittels herzustellen ist und bei Lösen desselben der Verdeckbezug vorzugsweise aufgrund seiner Eigenspannung beim Schließen automatisch in die zweite Stellung rutscht, ist sehr einfach zu bedienen.

Eine innerhalb eines bestimmten Längenbereichs stufenlose Einstellbarkeit der Länge des Verdeckbezugs verbessert weiterhin die optimale Anpassbarkeit des Verdecks an Abweichungen aufgrund der Toleranzen, die während der Fertigung des Rohbaus oder des Verdecks entstehen. Ebenfalls wird die Wartungsfähigkeit des Verdeckbezugs weiter verbessert.

Um die Verdecklänge nicht nur an einer Stelle und in eine Richtung zu variieren, ist die Befestigungsvorrichtung vorteilhafterweise auch zwei- oder mehrgeteilt ausgebildet. Die Änderung der Länge des Verdeckbezugs ist dann in verschiedenen Anbindungsbereichen an entweder dem Gestänge des Verdecks oder der Karosserie vornehmbar. Beispielsweise kann ein Teil der Befestigungsvorrichtung in der Dachspitze angeordnet sein und ein weiterer Teil der Befestigungsvorrichtung im hinteren Bereich des Verdecks. Auch in den neben den Haupt- bzw. C-Säulen befindlichen Bereichen ist die Befestigungsvorrichtung einsetzbar.

Besonders vorteilhaft ist eine gegebenenfalls mehrteilig auszubildende Verdeckbefestigungsvorrichtung, die ein Raster mit mehr als zwei einstellbaren Festlegungspunkten des Verdeckbezugs aufweist und somit einen Kompromiss zwischen einer stufenlos einstellbaren Befestigungsvorrichtung und einer minimalen Einstellbarkeit mit zwei Positionen darstellt. Diese ist einerseits konstruktiv einfach und dennoch sehr effektiv, was die Variation der Länge des Verdeckstoffs betrifft.

Ebenfalls von Vorteil ist die Ausbildung eines Cabriolet-Verdecks mit einer ein- oder mehrteiligen Kunststoffleiste, die einer Bügelkontur folgt. Durch die Lageveränderung der Kunststoffleiste ist somit über den gesamten Bereich der Bügelkontur eine Veränderung der Verdeckspannung möglich.

Besondere Vorteile bietet eine Kunststoffleiste, die eine Rasterung, dass heißt eine stufige Einstellbarkeit der Befestigungsvorrichtung über in der Kunststoffleiste vorhandene Löcher mit ausbildet. Durch die unterschiedliche Positionierung der Löcher bzw. die unterschiedliche Größe solcher Löcher kann die Lage der Kunststoffleiste variiert werden, wobei die Löcher über eine Steckverbindung an dem Rest der Befestigungsvorrichtung festgelegt werden.

Besonders gut zur Integration in bestehende Modellreihen geeignet ist die Festlegung des Verdeckbezugs mit einer Befestigungsvorrichtung, die ein Klemmprofil umfasst oder Teil eines Klemmprofils ist, welches zumindest Teil eines Haltebügels ist, idealerweise welches durch den Haltebügel selbst ausgebildet wird. Dies ist eine konstruktiv einfache und dennoch sichere Möglichkeit der Festlegung des Verdeckbezugs, bei der die Befestigungsvorrichtung von dem Haltebügel mit ausgebildet wird. Hierbei kann beispielsweise die Klemmung über den Andruck des Verdeckbezugs an einen Gegenhalter und durch ein Klemmprofil erfolgen, welches mittels einer Schraubverbindung oder einer ähnlichen Verbindung befestigt werden kann.

Für einen Durchgriff von Schrauben oder anderen Befestigungsmitteln durch den Verdeckbezug sind hierfür vorzugsweise im Bereich der Festlegung des Klemmprofils ausreichend große Löcher im Verdeckbezug vorhanden, so dass sowohl die Beweglichkeit des Verdeckbezugs zur Änderung der Verdeckspannung in der Geschlossenstellung als auch die Integrität des Verdeckbezugs in dem Festlegungsbereich nicht beeinträchtigt wird. Statt einer Verschraubung sind auch andere Arretiermittel denkbar, über die der Verdeckbezug festgelegt wird, sofern diese den Verdeckbezug zerstörungsfrei lösbar und vor allem auch einstellbar festlegen können.

Weiterhin vorteilhafterweise weist die Befestigungsvorrichtung gleichzeitig Profile zur Festlegung eines Verdeckhimmels oder einer weiteren Verdeckschicht auf, womit Verdeckbezug und Verdeckschicht in etwa parallel verlaufen können und eine Polsterschicht eine optimale Dämmung des Cabriolet-Innenraums bewirken kann.

Die Befestigungsvorrichtung weist in einer weiterhin vorteilhaften Ausbildung eine Form auf, die dazu geeignet ist, den Verdeckbezug gegen eine Rastkante oder ein Abrisskantenprofil zu drücken, so dass eine definierte Abknick- bzw. Abrisskante vorhanden ist. Der Bereich der Festlegung des Verdeckprofils ist somit nicht einsehbar und insbesondere in der Geschlossenstellung des Verdecks ist eine saubere Anlage des Verdeckbezugs gewährleistet.

Die Befestigungsvorrichtung kann vorteilhafterweise in einem Bereich der Dachspitze angeordnet sein, womit eine Änderung der Verdeckspannung in einem leicht zugänglichen Bereich vorgenommen werden kann.

In einer weiteren Ausbildung der Erfindung ist es von Vorteil, die Befestigungsvorrichtung dem Haltebügel zuzuordnen, wodurch diese in einem Bereich der Karosserie angeordnet ist, in dem mehr Platz zur Verfügung stehen kann als in einer Dachspitze. Gleiches gilt für die vorteilhafte Ausbildung eines Cabriolet-Verdecks, bei der die Befestigungsvorrichtung dem Spannbügel zugeordnet ist. Dieser kann durch seine eigene Beweglichkeit gegebenenfalls so bewegt werden, dass die Befestigungsvorrichtung leicht zugänglich ist und die Wartung des Verdecks und die Einstellung der Verdeckspannung leicht durchgeführt werden kann.

In einer besonders leicht zu bedienenden Ausführung der Erfindung weist das Cabriolet-Verdeck eine Befestigungsvorrichtung auf, die motorische Mittel zur Einstellung der Verdeckspannung umfasst. Bei dieser gegebenenfalls durch Spannungssensoren in oder an dem Verdeckbezug vervollständigten Ausstattung eines Cabriolet-Verdecks kann die Verdeckspannung beispielsweise während einer Fahrt oder während eines Wartungsaufenthalts gesteuert eingestellt werden. Die Einstellung der Verdeckspannung ist auf diese Weise auch im Rahmen einer Fernwartung möglich.

Ebenfalls gelöst wird die Aufgabe durch ein Cabriolet-Fahrzeug, welches ein vorbeschriebenes Verdeck aufweist.

Weitere Vorteile und Einzelheiten der Erfindung ergeben sich aus der nachfolgenden Figurenbeschreibung. Es zeigt schematisch dargestellt
- Fig. 1: eine perspektivische Darstellung eines erfindungsgemäßen Cabriolet-Fahrzeugs,
- Fig. 2: einen Schnitt entlang II-II gemäß Fig. 1,
- Fig. 3: einen Spannbügel mit Befestigungsvorrichtung,
- Fig. 4: den Ausschnitt A nach Fig. 3 und
- Fig. 5: den Ausschnitt B nach Fig. 3.

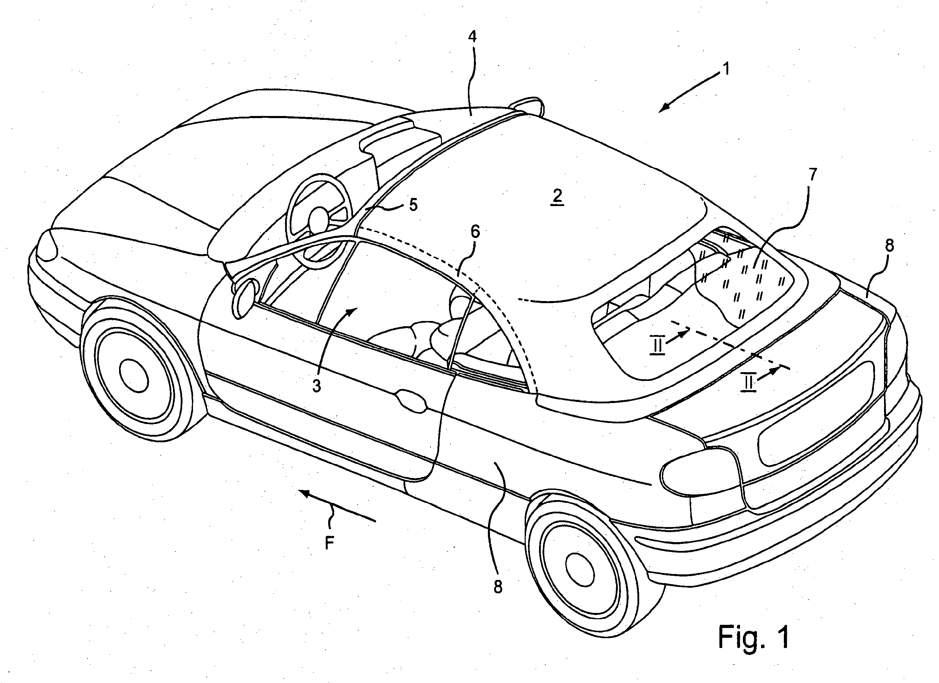

Sofern dienlich werden in der nachfolgenden Figurenbeschreibung gleichwirkende Teile mit identischen Ziffern versehen. Fig. 1 offenbart ein erfindungsgemäßes Cabriolet-Fahrzeug mit einem Cabriolet-Verdeck 1, welches einen äußeren Verdeckbezug 2 aufweist. In der in Fig. 1 gezeigten Geschlossenstellung überspannt das Cabriolet-Verdeck 1 einen Fahrgastinnenraum 3, der nach vorne hin von einer Windschutzscheibe 4 begrenzt wird.

Die Windschutzscheibe 4 ist in einem Windschutzscheibenrahmen 5 gehalten, an dem in der Geschlossenstellung das Verdeck festgelegt ist.

Das Verdeck 1 ist aufgespannt von einem nur teilweise und gestrichelt angedeuteten Verdeckgestänge 6, welches mittels einer Verdeckkinematik aus der nicht gezeigten Offenstellung in die gezeigte Geschlossenstellung überführbar ist. In der gezeigten Geschlossenstellung liegt der Verdeckbezug 2 mit der eingearbeiteten Heckscheibe 7 gespannt auf dem unterhalb des Verdeckbezugs 2 vorhandenen Gestänge.

In einem vorderen Bereich des Verdecks 1 ist der Verdeckbezug 2 an einer Dachspitze festgelegt, die gleichzeitig die Verbindung zum Windschutzscheibenrahmen 5 herstellt. In einem rückwärtigen Bereich des Verdecks 1 ist der Verdeckbezug 2 nicht sichtbar an Teilen der Karosserie 8 angeordnet.

Der Verdeckbezug 2 ist somit im Wesentlichen einerseits im Bereich der Dachspitze festgelegt, andererseits in einem rückwärtigen Bereich sowohl zu den Seiten als auch nach hinten hin, dass heißt entgegen der Fahrtrichtung F.

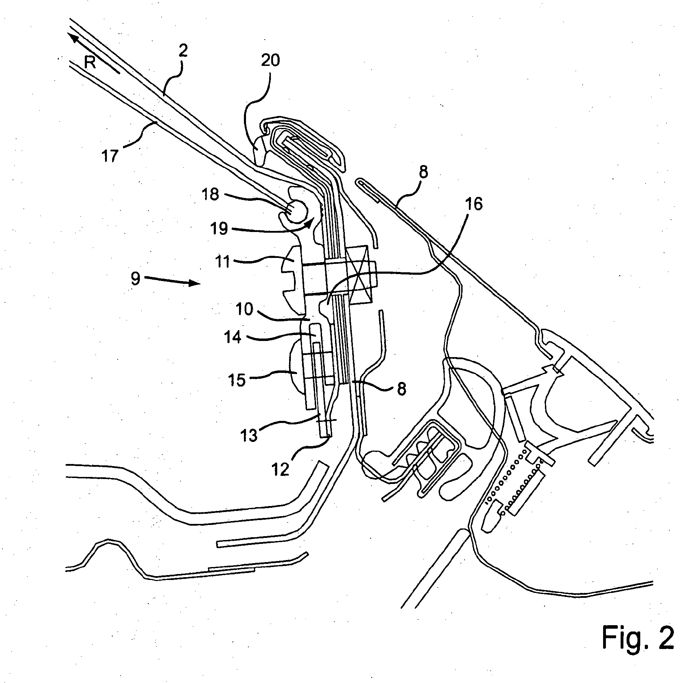

Sowohl in der Geschlossenstellung als auch in der Offenstellung ist der Verdeckbezug 2 in der in Fig. 2 schematisch dargestellten Art und Weise mittels einer Befestigungsvorrichtung 9 zerstörungsfrei lösbar und gezielt veränderbar, variabel festgelegt.

Die Befestigungsvorrichtung 9 legt den Verdeckbezug 2 mittels eines Klemmprofils 10 an Teilen der Karosserie 8, üblicherweise Blechen oder anderen tragenden Teilen fest. Hierbei wird das Klemmprofil 10, das in diesem Ausführungsbeispiel von einem Haltebügel des Verdecks ausgebildet wird, mittels einer Schraube 11 lösbar an der Karosserie 8 befestigt. Der Verdeckbezug 2 ist zusätzlich über eine an seinem Ende 12 angeordnete und an dem Verdeckbezug 2 festgelegte Kunststoffleiste 13, die alternativ auch aus einem anderen Material bestehen kann, zusätzlich in einer Nut 14 des Haltebügels bzw. Klemmprofils 10 gesichert. Selbst bei einem teilweisen Lösen der Schraube 11 könnte unabhängig von einem Arretiermittel 15 der Verdeckbezug 2 in der unter Spannung befindlichen Geschlossenstellung nicht aus der Befestigungsvorrichtung 9 entfernt werden. Gleichzeitig weist der Verdeckbezug 2 in seinem zur Kunststoffleiste hin befindlichen Randbereich ausreichend große Löcher 16 auf, die eine in diesem Fall begrenzte Beweglichkeit des Bezuges 2 gewährleisten. Der Verdeckbezug 2 ist somit über die Schraube 11, über das Klemmprofil 10 und die Kunststoffleiste 14 gesichert.

Das Arretiermittel 15 stellt zusammen mit der Kunststoffleiste 13 und dem hierfür in der Kunststoffleiste 13 befindlichen, nicht näher bezifferten Loch eine einfache Rasterung zur Verfügung, mit der die angebundene Länge des Verdeckbezugs 2 geändert werden kann. Auf diese Weise kann beispielsweise die Schraube 11 gelockert und das Arretiermittel 15 entfernt werden, so dass die Kunststoffleiste 13 tiefer in die Nut 14 hineinrutschen kann. Hierdurch wird Verdeckstoff bzw. der Verdeckbezug 2 in Richtung R freigegeben, bis die Kunststoffleiste 13 in die Nut 14 vollständig eingedrungen und auf dem Boden der Nut 14 angekommen ist. Alternativ ist die Kunststoffleiste 13 in einer weiteren Festlegungsposition in der Nut 14 festzulegen. Hierfür können Lochsteckverbindungen beliebiger Art in der Nut 14 bzw. in der Kunststoffleiste 13 realisiert werden.

Vorteilhafterweise weist das Klemmprofil 10 zusätzlich eine Form auf, die die Anbindung einer weiteren Verdeckschicht 17 mittels einer Verbindung durch einen Keder 18 ermöglicht.

Ebenso vorteilhafterweise kann das Klemmprofil 10 Rippen oder dergleichen geringfügig in den Verdeckbezug 2 eindringende Oberflächenprofilierungen 19 aufweisen, die zu einer erhöhten Festlegung des Verdeckbezugs 2 führen ohne diesen zu zerstören.

Weiterhin ist die Befestigungsvorrichtung 9 vorteilhafterweise so angeordnet, dass der Verdeckbezug 2 um eine eine Abrisskante erzeugende Dichtung 20 des Haltebügels 8 gedrückt wird.

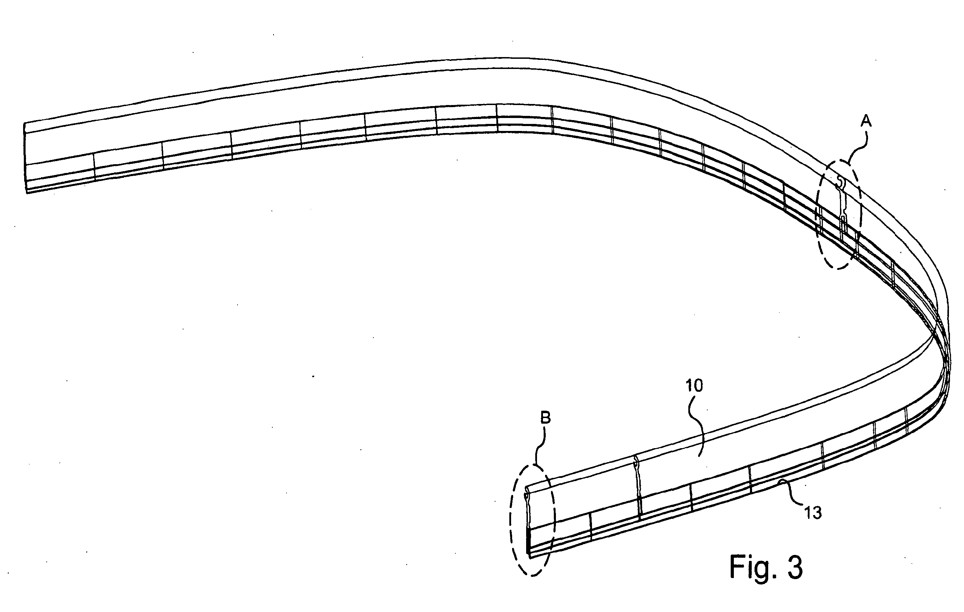

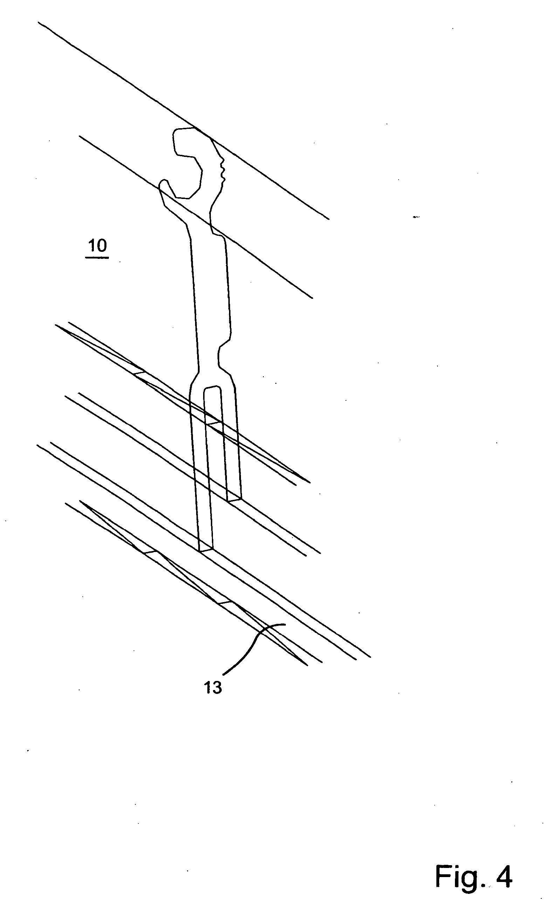

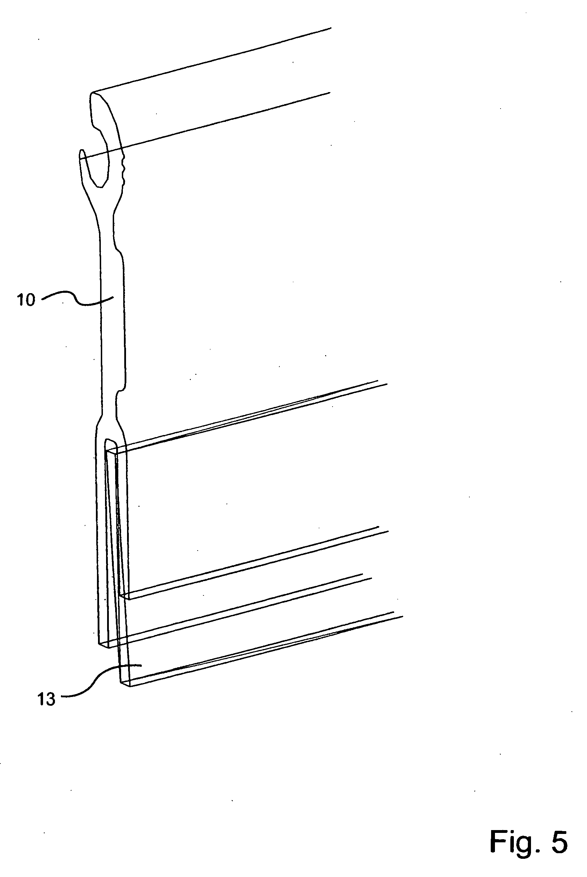

In Fig. 3 ist der Haltebügel bzw. das Klemmprofil 10 mit der Kunststoffleiste 13 perspektivisch dargestellt. In der Zusammenschau mit den Fig. 4 und Fig. 5 zeigt sich, dass die Kunststoffleiste 13 seitlich in den in der Nähe des Hauptlagers befindlichen Bereichen nahezu vollständig am Boden der Nut 14 anliegt. Aufgrund der in der Fig. 2 gezeigten Steckverbindung ist jedoch in dem rückwärtigen Bereich A die Kunststoffleiste 13 vom Boden der Nut 14 entfernt, so dass hier Variationsmöglichkeiten für eine Verlängerung im Sinne einer Freigabe von Verdeckbezug 2 gegeben sind. Ausgehend von dem Bereich A ist hin zu dem Bereich B eine kontinuierliche Variation der angebundenen Verdecklänge mittels der erfindungsgemäßen Befestigungsvorrichtung 9 realisiert. Eine solche Befestigungsvorrichtung 9 kann beispielsweise auch Teil eines Spannbügels sein. Die Erfindung führt in den einzelnen beschriebenen Ausbildungen zu einem Cabriolet-Fahrzeug mit einem langlebigeren Verdeck 2.

## Patentansprüche

1. Cabriolet-Verdeck mit einem äußeren Verdeckbezug (2), der durch die Überführung des Verdecks (1) aus dessen rückwärtiger Ablagestellung in eine Geschlossenstellung spannbar ist und sowohl in der Ablagestellung als auch in der Geschlossenstellung zumindest teilweise mittels einer Befestigungsvorrichtung (9) festgelegt ist, wobei die Befestigungsvorrichtung (9) zur Veränderung der Verdeckspannung in der Geschlossenstellung den Verdeckbezug (2) variabel festlegt und die Befestigungsvorrichtung (9) eine Kunststoffleiste (13) umfasst, an der der Verdeckbezug (2) befestigt ist und über deren Lage die Verdeckspannung variierbar ist, und wobei die Befestigungsvorrichtung (9) zur reversiblen Festlegung des Verdeckbezugs (2) ein Klemmprofil (10) umfasst,
**dadurch gekennzeichnet,**
**dass** die Kunststoffleiste (13) in einer Nut (14) des Klemmprofils (10) festlegbar ist und die Verdeckbezuglänge durch unterschiedliche Eindringtiefen der Kunststoffleiste (13) in die Nut (14)variierbar ist.

2. Cabriolet-Verdeck nach Anspruch 1,
**dadurch gekennzeichnet,**
**dass** der Verdeckbezug (2) zerstörungsfrei lösbar festgelegt ist.

3. Cabriolet-Verdeck nach Anspruch 1 oder 2,
**dadurch gekennzeichnet,**
**dass** der Verdeckbezug (2) durch die Befestigungsvorrichtung (9) auf zumindest zwei unterschiedliche Längen einstellbar ist.

4. Cabriolet-Verdeck nach einem der Ansprüche 1 bis 3,
**dadurch gekennzeichnet,**
**dass** die Länge des Verdeckbezugs (2) stufenlos einstellbar ist.

5. Cabriolet-Verdeck nach einem der Ansprüche 1 bis 4,
**dadurch gekennzeichnet,**
**dass** die Befestigungsvorrichtung (9) ein Raster zur Vorgabe verschiedener Längen des Verdeckbezugs aufweist.

6. Cabriolet-Verdeck nach einem der Ansprüche 1 bis 5,
**dadurch gekennzeichnet,**
**dass** die Form der ein- oder mehrteiligen Kunststoffleiste (13) einer Bügelkontur folgt.

7. Cabriolet-Verdeck nach einem der Ansprüche 5 oder 6,
**dadurch gekennzeichnet,**
**dass** das Raster über in der Kunststoffleiste (13) vorhandene Löcher mit ausgebildet wird.

8. Cabriolet-Verdeck nach einem der Ansprüche 1 bis 7,
**dadurch gekennzeichnet,**
**dass** das Verdeck (1) eine Abrisskantenprofil aufweist, gegen das der Verdeckbezug (2) von der Befestigungsvorrichtung (9) gedrückt wird.

9. Cabriolet-Verdeck nach einem der Ansprüche 1 bis 8,
**dadurch gekennzeichnet,**
**dass** die Befestigungsvorrichtung (9) dergestalt mehrteilig ausgebildet ist, dass die Länge des Verdeckbezugs (2) in verschiedenen Randbereichen des Verdeckbezugs (2) variierbar ist.

10. Cabriolet-Verdeck nach einem der Ansprüche 1 bis 9,
**dadurch gekennzeichnet,**
**dass** die Befestigungsvorrichtung (9)wenigstens teilweise Teil der Dachspitze ist.

11. Cabriolet-Verdeck nach einem der Ansprüche 1 bis 10,
**dadurch gekennzeichnet,**
**dass** die Befestigungsvorrichtung (9) zumindest teilweise von einem Haltebügel (10) ausgebildet wird.

12. Cabriolet-Verdeck nach einem der Ansprüche 1 bis 10,
**dadurch gekennzeichnet,**
**dass** die Befestigungsvorrichtung (9) einem Spannbügel zugeordnet ist und zumindest teilweise von diesem ausgebildet wird.

13. Cabriolet-Verdeck nach einem der Ansprüche 1 bis 12,
**dadurch gekennzeichnet,**
**dass** die Befestigungsvorrichtung (9) zur Festlegung an einer Karosserie (8) ausgebildet ist.

14. Cabriolet-Verdeck nach einem der Ansprüche 1 bis 13,
**dadurch gekennzeichnet,**
**dass** die Befestigungsvorrichtung (9) motorische Mittel zur Einstellung der Verdeckspannung aufweist.

15. Cabriolet-Fahrzeug,
**gekennzeichnet durch**
ein Verdeck (1) nach einem der Ansprüche 1 bis 14.

## Claims

1. A convertible hood comprising an exterior hood cover (2) which can be tightened by moving the hood (1) from its rear stowage position into a closed position and which is fixed both in the stowage position and in the closed position at least partly by means of a fastening device (9), said fastening device (9) variably fixing the hood cover (2) in order to change the hood tension in the closed position and said fastening device (9) comprising a plastic strip (13) to which the hood cover (2) is fixed and the position of which allows the tension of the hood to be varied, and said fastening device (9) comprising a clamping profile (10) for reversible fixing of the hood cover (2), **characterised in that** the plastic strip (13) can be fixed in a groove (14) of the clamping profile (10) and the length of the hood cover can be varied by different depths of penetration of the plastic strip (13) into the groove (14).

2. The convertible hood according to claim 1, **characterised in that** the hood cover (2) is fixed so as to be releasable without being destroyed.

3. The convertible hood according to claim 1 or 2, **characterised in that** the hood cover (2) can be adjusted to at least two different lengths by the fastening device (9).

4. The convertible hood according to any one of claims 1 to 3, **characterised in that** the length of the hood cover (2) is continuously adjustable.

5. The convertible hood according to any one of claims 1 to 4, **characterised in that** the fastening device (9) comprises a catch for defining different lengths of the hood cover.

6. The convertible hood according to any one of claims 1 to 5, **characterised in that** the shape of the monobloc or segmented plastic strip (13) follows the contour of a bracket.

7. The convertible hood according to any one of claims 5 or 6, **characterised in that** the catch is formed by holes in the plastic strip (13).

8. The convertible hood according to any one of claims 1 to 7, **characterised in that** the hood (1) comprises an airflow breakaway edge profile against which the hood cover (2) is pressed by the fastening device (9).

9. The convertible hood according to any one of claims 1 to 8, **characterised in that** the fastening device (9) has a segmented design such that the length of the hood cover (2) is variable in various edge regions of the hood cover (2).

10. The convertible hood according to any one of claims 1 to 9, **characterised in that** at least part of the fastening device (9) is part of the roof header.

11. The convertible hood according to any one of claims 1 to 10, **characterised in that** the fastening device (9) is formed at least partly by a holding bracket (10).

12. The convertible hood according to any one of claims 1 to 10, **characterised in that** the fastening device (9) is assigned to a tensioning bracket and is formed at least partly by the latter.

13. The convertible hood according to any one of claims 1 to 12, **characterised in that** the fastening device (9) is designed to be fixed to a vehicle body (8).

14. The convertible hood according to any one of claims 1 to 13, **characterised in that** the fastening device (9) comprises motor means for adjusting the tension of the hood.

15. A convertible vehicle, **characterised by** a hood (1) according to any one of claims 1 to 14.

## Revendications

1. Capote pour cabriolet, comportant un recouvrement de capote extérieur (2) que l'on peut tendre par déplacement de la capote (1) de sa position de rangement arrière vers une position fermée et qui est fixé, tant en position de rangement qu'en position fermée, au moins partiellement par un dispositif de fixation (9), ledit dispositif de fixation (9) fixant le recouvrement de capote (2) de manière variable afin de varier la tension de la capote en position fermée et ledit dispositif de fixation (9) comportant une baguette en plastique (13) sur laquelle le recouvrement de capote (2) est fixé et dont la position permet de varier la tension de la capote, et ledit dispositif de fixation (9) comportant un profilé de serrage (10) pour la fixation réversible du recouvrement de capote (2), **caractérisée en ce que** la baguette en plastique (13) peut être fixée dans une rainure (14) du profilé de serrage (10) et que la longueur du recouvrement de capote peut être variée par des profondeurs de pénétration différentes de la baguette en plastique (13) dans la rainure (14).

2. Capote pour cabriolet selon la revendication 1, **caractérisée en ce que** le recouvrement de capote (2) est fixé de manière à être libérable sans être détruit.

3. Capote pour cabriolet selon la revendication 1 ou 2, **caractérisée en ce que** le recouvrement de capote (2) est réglable à au moins deux longueurs différentes par le dispositif de fixation (9).

4. Capote pour cabriolet selon l'une quelconque des revendications 1 à 3, **caractérisée en ce que** la longueur du recouvrement de capote (2) est réglable en continue.

5. Capote pour cabriolet selon l'une quelconque des revendications 1 à 4, **caractérisée en ce que** le dispositif de fixation (9) comporte une encoche pour définir des longueurs différentes du recouvrement de capote.

6. Capote pour cabriolet selon l'une quelconque des revendications 1 à 5, **caractérisée en ce que** la forme de la baguette en plastique (13) en monobloc ou en plusieurs parties suit le contour d'un étrier.

7. Capote pour cabriolet selon l'une quelconque des revendications 5 ou 6, **caractérisée en ce que** l'encoche est réalisée partiellement par des trous dans la baguette en plastique (13).

8. Capote pour cabriolet selon l'une quelconque des revendications 1 à 7, **caractérisée en ce que** la capote (1) comporte un profilé d'arrête de décollement contre lequel le recouvrement de capote (2) est poussé par le dispositif de fixation (9).

9. Capote pour cabriolet selon l'une quelconque des revendications 1 à 8, **caractérisée en ce que** le dispositif de fixation (9) est réalisé en plusieurs parties de sorte que la longueur du recouvrement de capote (2) soit variable dans plusieurs régions périphériques du recouvrement de capote (2).

10. Capote pour cabriolet selon l'une quelconque des revendications 1 à 9, **caractérisée en ce que** le dispositif de fixation (9) fait au moins partiellement partie du sommet de toit.

11. Capote pour cabriolet selon l'une quelconque des revendications 1 à 10, **caractérisée en ce que** le dispositif de fixation (9) est constitué au moins partiellement par un étrier de retenue (10).

12. Capote pour cabriolet selon l'une quelconque des revendications 1 à 10, **caractérisée en ce que** le dispositif de fixation (9) est associé avec un étrier de tension et est constitué au moins partiellement par ce dernier.

13. Capote pour cabriolet selon l'une quelconque des revendications 1 à 12, **caractérisée en ce que** le dispositif de fixation (9) est réalisé pour être fixé sur une carrosserie (8).

14. Capote pour cabriolet selon l'une quelconque des revendications 1 à 13, **caractérisée en ce que** le dispositif de fixation (9) comporte des moyens moteurs pour le réglage de la tension de capote.

15. Véhicule cabriolet, **caractérisé par** une capote (1) selon l'une quelconque des revendications 1 à 14.
